# EUROPÄISCHE PATENTSCHRIFT

(11) **EP 0 654 548 B1**
(45) Veröffentlichungstag und Bekanntmachung des Hinweises auf die Patenterteilung: **19.08.1998**
(21) Anmeldenummer: 94118329.5
(22) Anmeldetag: 22.11.1994
(51) Int. Cl.: C25D 13/22, B05C 3/10, B65G 49/04

(54) **Vorrichtung zum Tauchlackieren**
Apparatus for immersion painting
Dispositif pour la peinture par immersion

(30) Priorität: 23.11.1993 DE 4339774; 13.08.1994 DE 4428789
(43) Veröffentlichungstag der Anmeldung: 24.05.1995
(73) Patentinhaber: Nütro Maschinen- und Anlagenbau GmbH & Co. KG, D-90425 Nürnberg (DE)
(72) Erfinder: Brendel, Gerhard, D-91275 Auerbach (DE); Fuchs, Rudolf, D-90403 Nürnberg (DE)
(74) Vertreter: König, Reimar, Dr.-Ing.

(56) Entgegenhaltungen:
- EP-A- 0 225 209
- EP-A- 0 371 900
- PATENT ABSTRACTS OF JAPAN vol. 16, no. 466 (C-989) 28. September 1992 & JP-A-04 165 099 (TOYOTA MOTOR CORP) 10. Juni 1992
- PATENT ABSTRACTS OF JAPAN vol. 14, no. 134 (C-701) (4077) 14. März 1990 & JP-A-02 008 399 (KAWASAKI STEEL CORP) 11. Januar 1990

## Beschreibung

Die Erfindung betrifft eine Vorrichtung zum Tauchlackieren, insbesondere zum elektrophoretischen Tauchlackieren von Lackiergut.

Bei einer derartigen, in der deutschen Patentschrift 41 42 997 beschriebenen Vorrichtung fördert ein über Kettenräder geführtes Transportband in Lamellenbauweise das Lackiergut durch das Lackbad. Die Lamellen sind stehend auf über Antriebsketten miteinander verbundenen Querstäben angeordnet und durch Distanzhülsen voneinander getrennt. Jede Lamelle besitzt unterschiedlich hohe Zähne, auf denen das Lackiergut liegt. Dieses Transportband weist den Vorteil auf, daß sich am Übergang von einem Förderer zum nächsten fingerartig vorkragende Enden der Lamellen in freie Lücken des anschließenden Transportbandes bewegen, dabei kammartig ineinandergreifen und ein schonendes, beschädigungsfreies Übergeben des Lackiergutes gewährleisten. Wenn das Transportband schräg in eine Lackwanne hineingeführt wird und von einem Umlenkpunkt an schräg aus der Lackwanne wieder herausläuft, ergibt sich eine Umlagerung des Lackiergutes im Bereich des Umlenkpunkts, so daß die ursprünglichen Auflagestellen des Lackiergutes danach ungehindert und vollständig vom Lack umspült werden können. Die bekannte Vorrichtung hat sich bewährt, jedoch läßt sich nicht immer das Lackiergut verkratzungsfrei beschichten und bleiben die Auflagepunkte in der Lackierung oft sichtbar.

Des weiteren lagert sich an den Transportbändern unvermeidbar Lack ab, dessen Schichtdicke immer größer wird, da sich die Lamellen im Betrieb schlecht reinigen lassen. Es ist daher erforderlich, die Transportbänder und damit die Lackieranlage von Zeit zu Zeit stillzusetzen, um Schäden und Verunreinigungen zu beseitigen, was zu einem entsprechenden Produktionsausfall führt.

Des weiteren ist aus der europäischen Offenlegungsschrift 0 225 209 eine Lackiervorrichtung mit einer Hängebahn bekannt, bei der das Lackiergut in Gestalt einer Kraftfahrzeugkarosserie ortsfest auf einer Plattform angeordnet ist. Diese Plattform ist gelenkig mit Greifarmen verbunden, die pendelnd an über Rollen in Schienen geführten Ketten aufgehängt sind. Auf diese Weise behalten die Greifarme auch bei in der Vertikalen geneigtem Verlauf der Schienen stets ihre vertikale Lage bei. Das hat zur Folge, daß sich die Plattform beim Eintauchen in das Lackierbad entsprechend der Schienenneigung schrägstellt.

Der Erfindung liegt daher das Problem zugrunde, eine Lackiervorrichtung der eingangs erwähnten Art zu schaffen, mit der sich Gegenstände fehler-, insbesondere kratzerfrei und mit höchster Qualität lackieren lassen.

Ausgehend von dieser Aufgabenstellung besteht die Erfindung in einer Lackiervorrichtung mit einer Lackwanne und einer oberhalb der Lackwanne angeordneten Hängebahn mit Gondeln, die mit mindestens einer in eine Führungsschiene eingreifenden Lenkrolle zum Führen der Gondeln ausgestattet sind. Die Gondeln tragen Paletten, auf denen sich das Lackiergut befindet. Die einzelnen Paletten können verhältnismäßig große Abmessungen aufweisen. Das Lackiergut liegt ausschließlich auf den Paletten, so daß sich beim Durchlaufen der Wanne keine Relativbewegungen zwischen den Paletten und dem Lackiergut, auch nicht an Umlenkpunkten ergeben. Dadurch werden Fehler im Lack mit Sicherheit vermieden.

Die Hängebahn kann die Paletten durch die Lackwanne führende Greifer aufweisen, so daß sich die Paletten zur Reinigung oder zur Reparatur einzeln abnehmen lassen, ohne daß ein Stillsetzen des Förderers erforderlich ist.

Die Paletten können aus einem Rahmen und einem von dem Rahmen getragenen Rost mit Sägezahnlamellen bestehen, auf denen das Lackiergut punktweise aufliegt. Auf diese Weise wird das Lackiergut mit Ausnahme seiner Auflagepunkte vollständig lackiert. Um eine sichere Auflage auch für unterschiedlich und unregelmäßig konturiertes Lackiergut zu gewährleisten, können die Zähne der Lamellen unterschiedliche Höhen besitzen.

Handelt es sich um ein elektrophoretisches Tauchlackieren, das eine Gleichspannung für den Lack als Elektrolyt und das Lackiergut erfordert, können beiderseits der Paletten im Bereich der Lackwanne auf seitlichen Zapfen der Paletten aufliegende Führungsschienen aus Isoliermaterial angeordnet und wenigstens bereichsweise an den Führungsschienen angeordnete Kontaktbürsten die seitlichen Zapfen der Paletten streifen. Diese Kontaktbürsten stellen den elektrischen Kontakt zu den Paletten und damit zum Lackiergut her.

Im Anschluß an die Lackwanne kann ein Lacktrockner beispielsweise mit Infrarot-Strahlern angeordnet sein. Der Förderer kann dann aus einem die Paletten kontinuierlich durch die Lackwanne geführten Teil und einem taktweise durch den Lacktrockner geführten Teil bestehen, zwischen den beiden Teilen kann eine Übergabevorrichtung angeordnet sein.

Die Übergabevorrichtung kann aus einem parallelogrammgeführten Schwingrahmen mit während der Übergabe die Zapfen der Palette aufnehmenden Halterungen bestehen. Die Übergabevorrichtung ist so gesteuert, daß sie jeweils eine mit gleichmäßiger Geschwindigkeit durch die Lackwanne geförderte Palette aufnimmt und auf dem taktweise durch den Lacktrockner geführten Teil des Palettenförderers absetzt.

Um eine platzsparende Bauweise zu erreichen, kann im Lacktrockner mindestens ein Senkrechtförderer für mindestens eine Palette und im oberen Bereich ein Waagerecht förderer zum Ausschleusen der Paletten aus dem Lacktrockner angeordnet sein. Dabei kann sich an den Lacktrockner eine Kühlzone mit einem Senkrechtförderer anschließen. Vorzugsweise nimmt der Senkrechtförderer jeweils vier Paletten auf; sie werden dann taktweise durch den Lacktrockner nach oben transportiert und dabei getrocknet, im oberen Bereich durch den Waagerechtförderer in die Kühlzone transportiert und von dem Senkrechtförderer in der Kühlzone wieder nach abwärts transportiert.

Besondere Vorteile ergeben sich, da der Palettenförderer aus einer oberhalb der Lackwanne angeordneten Hängebahn besteht, weil dann der eigentliche Förderer außerhalb des Lackbades bleibt und lediglich die Gondeln bzw. Greifer oder Teile der Greifer mit dem Lack in Berührung kommen.

Die Hängebahn kann ketten- bzw. seilgeführte Gondeln mit klauenartigen Tragarmen besitzen, die unter die mit dem Lackiergut belegten Paletten greifen und nur zum Teil in das Lackbad eintauchen. Zum Führen der Gondeln insbesondere beim Eintauchen der Paletten in das Lackbad und bei deren Auftauchen aus dem Lackbad können die Gondeln mit mindestens einer in Schienen der Hängebahn eingreifenden Lenkrolle versehen sein. Vorzugsweise sind die Gondeln jedoch mit je einer Lenkrolle an winklig zueinander verlaufenden Lenkarmen ausgestattet, von denen einer zum Führen in der Horizontalen und der andere zum Führen der Gondel in der Vertikalen dient. Dies kann mit mindestens einem trapezförmigen Schienenrahmen geschehen, der eine untere, außerhalb der Lackbahn verlaufende Horizontalschiene besitzt.

Vorzugsweise befindet sich zwischen einer angetriebenen Kette oder einem angetriebenen Seil und der Gondel eine schienengeführte Gleitrolle, die ein weitgehend erschütterungsfreies Bewegen der Paletten durch das Lackbad gewährleistet.

Die Gondeln können aus einem Rahmen mit den Lenk- und den Tragarmen bestehen.

Um den Förderer weitestgehend stromlos zu halten, sind die Tragarme vorzugsweise gegenüber den anderen Fördererbestandteilen bzw. dem Gondelrahmen elektrisch isoliert; zur Stromzuführung lassen sich dann im Bereich der Lackwanne angeordnete, in die Bewegungsbahn der Tragarme ragende elektrische Kontaktelemente, beispielsweise Kontaktbürsten verwenden.

Um eine qualitativ hochwertige Beschichtung zu gewährleisten, die auch an den Auflagepunkten des Lackiergutes geschlossen ist, kann das Lackiergut zweimal lackiert werden. Die zweite Lackierung kann aus demselben Lack bestehen, indem das Lackiergut ein zweites Mal durch die Lackwanne geführt wird, oder aber das Lackiergut wird durch eine zweite Lackwanne mit einem anderen Lack geführt.

Um für das zweimalige Lackieren eine platzsparende Anordnung zu erreichen, können die Paletten mit zwei Förderern durch die Lackwanne, aber auch durch den Lacktrockner und die Kühlzone geführt werden. Ein Palettenförderer dient dann zum Vorlackieren und der andere für das Nachlackieren. Ein Palettenförderer für vorlackiertes Lackiergut führt vom Lacktrockner oder dessen Kühlzone zum Anfang des Palettenförderers für das Nachlackieren und ein weiterer Palettenförderer für leere Paletten vom Lacktrockner oder dessen Kühlzone zum Anfang des Palettenförderers für das Vorlackieren. Das Lackiergut durchläuft somit zweimal die Lackwanne, den Lacktrockner und eine etwaige Kühlzone; es wird auf diese Weise doppelt beschichtet. Zwischen den Förderern kann eine Übergabevorrichtung angeordnet sein.

Beim zweistufigen Lackieren kann die Kühlzone des Trockners auch entfallen, da das Lackiergut beim Rücktransport zum Nachlackieren hinreichend abkühlt.

Um während des Betriebes ein zunehmendes Abscheiden von Lack auf den Paletten bzw. deren Lamellen zu vermeiden, kann vor einer Aufgabevorrichtung für das Lackiergut eine Vorrichtung zum Entlacken der Paletten angeordnet sein, die vorzugsweise aus einer quer zur Bewegungsrichtung der Paletten angeordneten rotierenden Drahtbürste besteht. Mittels dieser Drahtbürste läßt sich der Lack wenigstens von den Zähnen der Lamellen entfernen, so daß beim elektrophoretischen Tauchlackieren ein einwandfreier Kontakt gewährleistet ist.

Damit beim Nachlackieren eine geschlossene Lackschicht entsteht, die auch die Auflagepunkte beim Vorlackieren abdeckt, kann das Lackiergut auf den Paletten nach dem Vorlackieren umgelagert werden. Vorzugsweise geschieht dies mit einer Vorrichtung, die einen heb- und senkbaren, zwischen die Lamellen der Palette greifenden, das Lackiergut kurz anhebenden Aushebekamm besitzt. Während des Anhebens bewegt sich die Palette weiter, so daß beim nachfolgenden Ablegen des Lackiergutes nicht dieselben Auflagepunkte mit den Zähnen der Lamellen in Berührung kommen. Da das Lackiergut zum Umlagern von den Paletten abgehoben wird, entstehen keine Kratzer im Lack; denn das Lackiergut wird in cumulo angehoben, so daß es beim Umlagern nicht zu einer gegenseitigen Berührung oder zu berührenden Relativbewegungen kommt.

Vor dem Trocknen kann das Lackiergut von einer Seite her, beispielsweise mit Hilfe von Infrarot-Strahlern, getrocknet und dabei gegebenenfalls von der anderen Seite her gekühlt sowie nach einem Kühlen gewendet werden. Dabei wird der Lack einseitig so gehärtet, daß nach dem Wenden und insbesondere bei dem nachfolgenden Trocknen an den Auflage- und Berührungspunkten keine Lackschäden entstehen.

Das Trocknen der Lackschicht beim Vor- und/oder auch beim Schlußtrocknen geschieht vorzugsweise mit Hilfe von Infrarot-Strahlen, die in Abhängigkeit von der jeweiligen Energiedichte kurze Trocknungszeiten bewirken. Besonders geeignet sind kurzwellige Infrarot-Strahlen mit Energiedichten in der Größenordnung von 200 kW/m². Ein besonderer Vorteil des Trocknens mit Hilfe von Infrarot-Strahlen besteht darin, daß es insbesondere bei der Verwendung von Wasserlacken nicht zu einer Blasenbildung der Lackschicht kommt.

Eine wesentliche Verkürzung der Trocknungszeit ergibt sich, wenn das Trocknen in einem Luftstrom stattfindet, der ein rasches Abführen des Lösungsmittels, beispielsweise Wasser, bewirkt. Das Trocknen im Luftstrom kann auch mit anderen Wärmequellen geschehen, beispielsweise in einer von außen beheizten Kammer.

Auf die Art, wie das Lackiergut durch die Trocknungszone bewegt wird, kommt es nicht an; dies kann mit Hilfe der erfindungsgemäßen Paletten oder auch mit einem anderen Förderer, beispielsweise einem herkömmlichen Bandförderer geschehen.

Die Erfindung schließt auch ein Verfahren zum Tauchlackieren ein, bei dem ein Lackiergut durch ein Lackbad geführt, zwischengetrocknet, umgelagert, nachlackiert und schlußgetrocknet wird.

Um die Leitfähigkeit des Lacks nach dem Vorlackieren zu erhöhen, kann die Lackierung vor dem Nachlackieren zur Erhöhung der Leitfähigkeit ionisiert werden.

Die Erfindung wird nachstehend anhand eines in der Zeichnung dargestellten Ausführungsbeispiels des näheren erläutert. In der Zeichnung zeigen:
- Fig. 1: eine schematische, seitliche Schnittansicht einer Lackiervorrichtung,
- Fig. 2: eine Draufsicht auf die Lackiervorrichtung,
- Fig. 3: eine Draufsicht auf die Rückführbahnen im unteren Teil der Lackiervorrichtung nach Fig. 1,

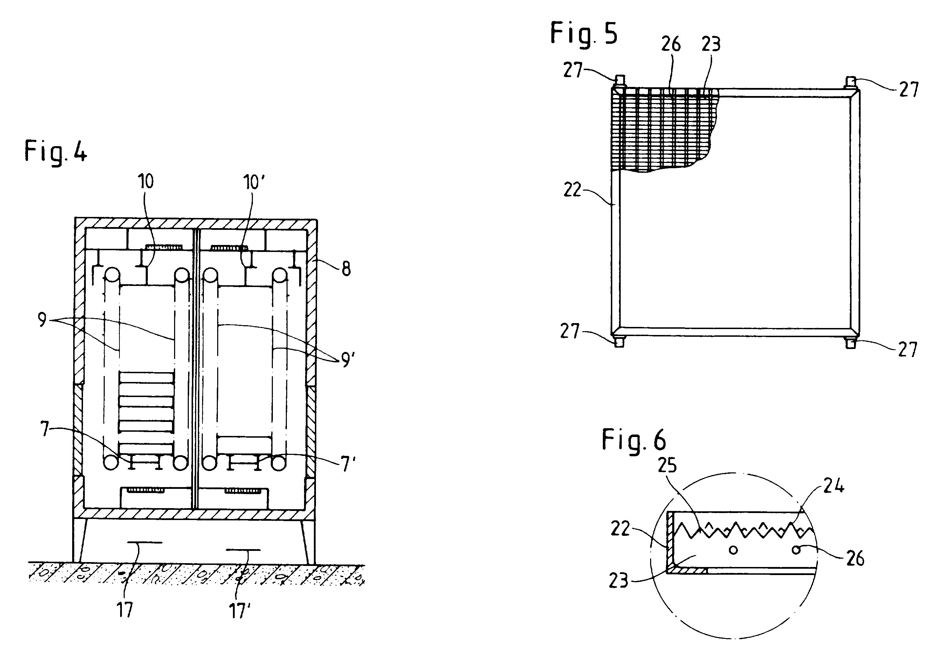

- Fig. 4: einen Schnitt durch einen Trockner entlang der Linie IV - IV der Fig. 1,
- Fig. 5: eine Draufsicht auf eine Palette,
- Fig. 6: einen Teil der Palette gemäß Fig. 5,

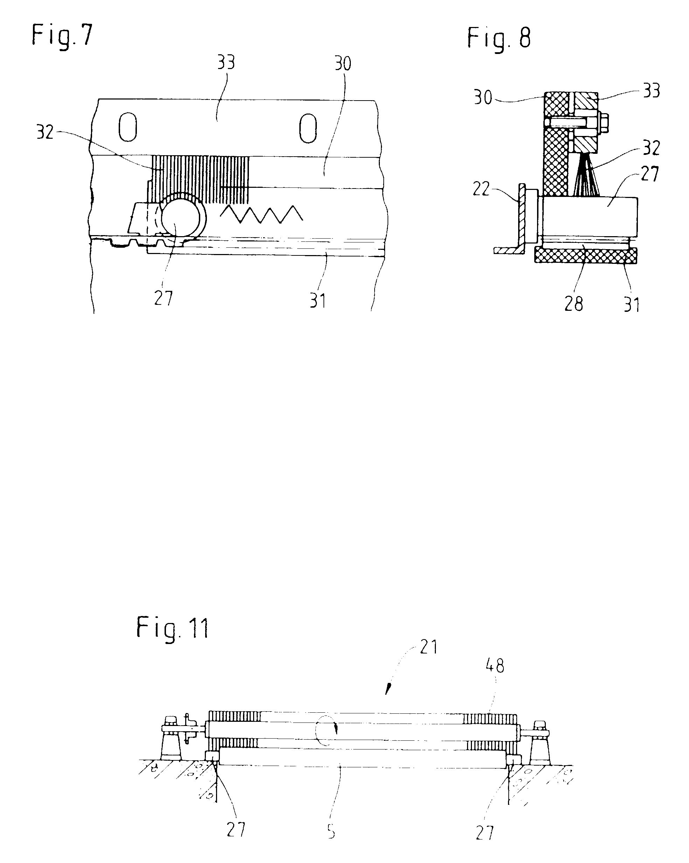

- Fig. 7: eine Teildarstellung der Palette in der Lackwanne,
- Fig. 8: einen Querschnitt der Palettenbahn,
- Fig. 9: die Seitenansicht einer Übergabevorrichtung,
- Fig. 10: die Schnittansicht einer Vorrichtung zum Umlagern des Lackiergutes,
- Fig. 11: die Seitenansicht einer Vorrichtung zum Entfernen des Lacks von den Paletten,
- Fig. 12: die schematische Seitenansicht der Lackiervorrichtung mit der erfindungsgemäßen Hängebahn,
- Fig. 13: einen Teilschnitt nach der Linie XIII-XIII in Fig. 12 und
- Fig. 14: einen Vertikalschnitt durch einen Trockner zum Infrarot-Trocknen des Lackierguts.

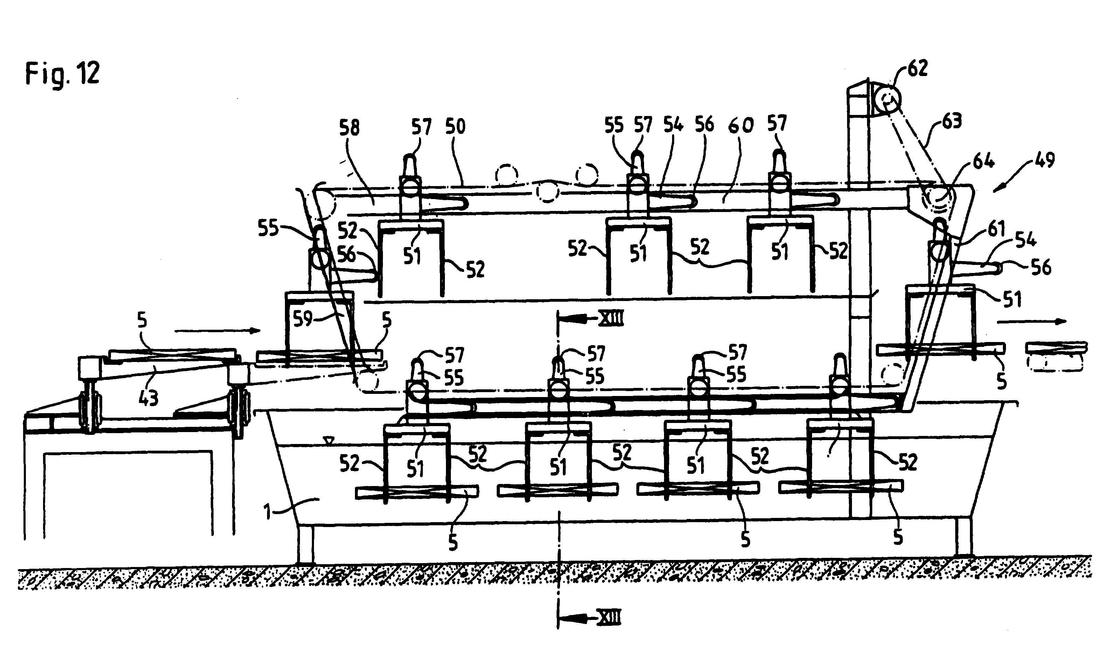

Die Tauchlackiervorrichtung weist eine Wanne 1 mit einem Lackbad auf, durch welches wie in Abb. 12 dargestellt mit Hilfe einer Hängebahn Paletten 5 geführt werden können, die das Lackiergut tragen.

An die Lackwanne 1 schließt sich ein Förderband 7 an, das sich taktweise bewegt und in einen Lacktrockner 8 führt. Zwischen der Lackwanne 1 und dem Förderband 7 ist eine Übergabevorrichtung 6 angeordnet, die die Paletten 5 von der Hängebahn übernehmen und auf dem Förderband 7 absetzt. Im Lacktrockner 8 befindet sich ein Senkrechtförderer 9, der aus parallelen, senkrecht verlaufenden Transportketten besteht, jeweils vier Paletten mittels Nasen untergreift und taktweise nach oben durch den Lacktrockner 8 bewegt.

Im Deckenbereich des Lacktrockners 8 ist ein Waagerecht förderer 10 mit zwei Horizontalketten angeordnet, der die Paletten 5 aus dem Lacktrockner 8 ausschleust und in den Bereich eines weiteren Abwärtsförderers 12 bringt. Dieser Abwärtsförderer ist in einer Kühlzone 11 angeordnet, in der die Paletten abwärts gefördert werden. Im unteren Bereich der Kühlzone 11 ist ein weiteres Förderband 13 angeordnet, das die Paletten in den Bereich einer Kippvorrichtung 14 bewegt, die das Lackiergut von den Paletten 5 in einen Sammelbehälter 15 abkippt. Danach werden die Paletten 5 mittels eines weiteren Senkrechtförderers 16 in den Bereich eines Förderbandes 17 gebracht, das unterhalb des Lacktrockners 8 und der Lackwanne 1 verläuft und die leeren Paletten 5 zum Entlacken bzw. an den Beginn der Lackwanne 1 zurückbringt. Dort werden sie mit Lackiergut beladen und danach erneut durch die Lackwanne 1 geführt.

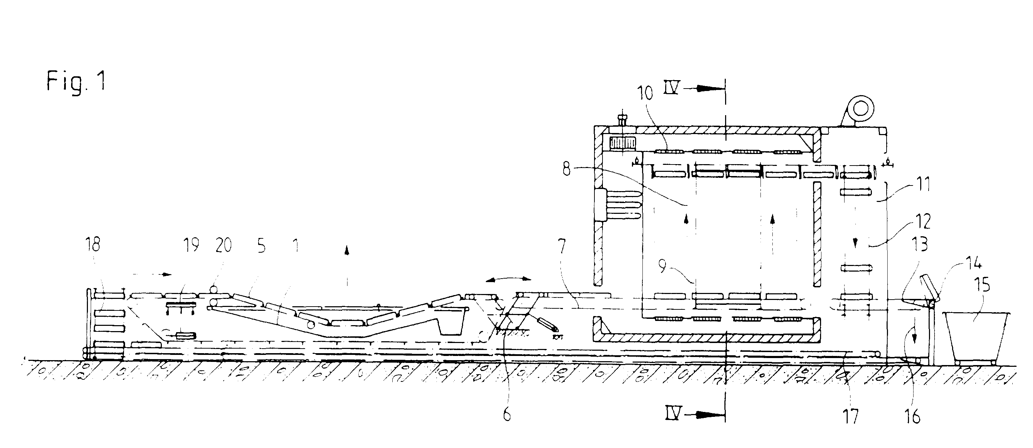

Die in Fig. 1 dargestellte Lackiervorrichtung dient zum einfachen Tauchlackieren mittels lösungsmittelhaltigem Lack, da in diesem Fall das durch die Lackwanne geführte Lackiergut direkt in den Lacktrockner 8 gebracht werden kann. Demgegenüber wird das Lackiergut nach einem elektrophoretischen Lackieren mit Wasser abgespült und/oder durch mindestens ein Permeatbad geführt, um den nicht koagulierten Lack zu entfernen. Dieses Spülen geschieht in mehreren Stufen, in der letzten Stufe mit vollentsalztem Wasser.

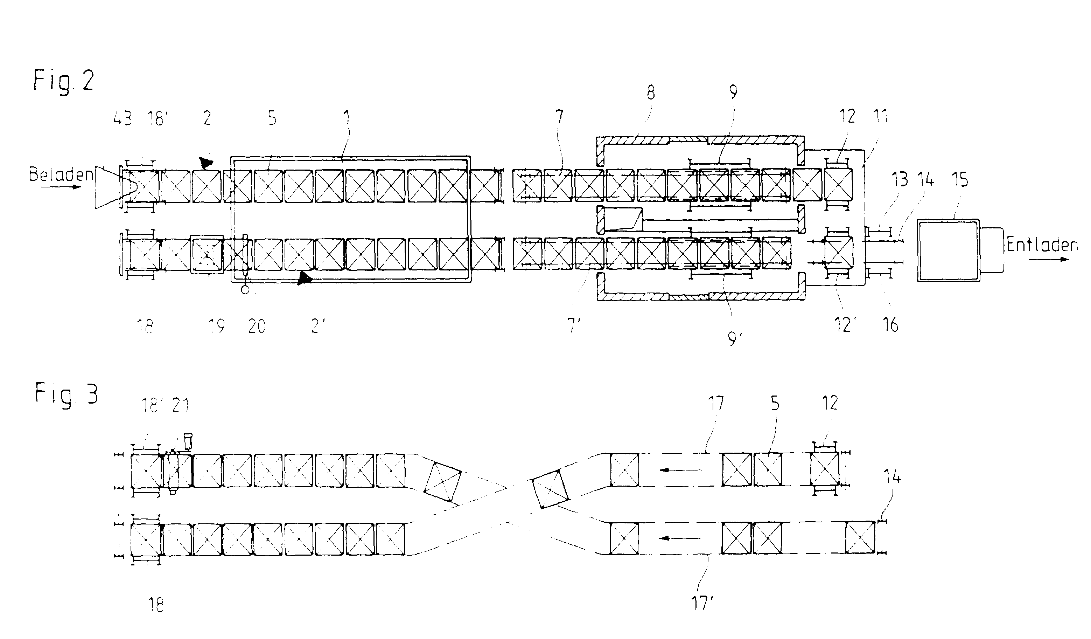

Dem Nachlackieren dienen, wie aus Fig. 2 und 3 ersichtlich, zwei parallele Lackierlinien 2,2'. Am Anfang der Linie 2 werden die Paletten 5, wie bereits beschrieben, mittels einer Aufgabevorrichtung 43 mit dem Lackiergut beladen, durchlaufen die Lackwanne 1, den Lacktrockner 8 sowie dessen Kühlzone 11 und werden längs Rückführbahnen 17,17' an den Anfang der Lackierlinie 2' zurückgefördert. Aus Fig. 3 ist ersichtlich, daß die Rückführbahn 17,17' verschränkt verlaufen und die Förderbahn 17' nicht unterhalb der Förderbahn 2 im Bereich eines Senkrechtförderers 18' endet, sondern parallel dazu im Bereich des Senkrechtförderers 18. Mittels dieses Senkrechtförderers 18 gelangen die Paletten 5 auf eine Bahn 2', die parallel zu der Bahn 2 durch die Lackwanne 1 geführt ist. Bevor die über die Bahn 2' transportierten Paletten 5 mit vorlackiertem Lackiergut in die Lackwanne 1 eintauchen, wird das Lackiergut auf den Paletten 5 mittels einer Vorrichtung 19 umgelagert, so daß die beim Vorlackieren nicht lackierten Auflage- und Berührungspunkte freigelegt und lackiert werden können.

Falls die Lackschicht infolge des Trocknens eine ungenügende Restfeuchte und damit eine zu geringe Leitfähigkeit besitzt, können die Teile vor dem zweiten Durchgang mittels einer Ionisiervorrichtung 20 ionisiert werden.

Von der Bahn 2' gelangen die Paletten 5 in der bereits beschriebenen Weise auf ein Förderband 7' und in den Lacktrockner; sie werden mittels eines Senkrechtförderers 9' nach oben und im Deckenbereich mittels eines Waagerechtförderers 10' in die Kühlzone 11 befördert. Von dort gelangen sie mit einem Senkrechtförderer 12' nach unten und mittels eines Förderbandes 13 in den Bereich der bereits beschriebenen Kippvorrichtung 14. Mittels des Senkrechtförderers 16 werden sie dann auf einem Förderband 17' abgelegt, das ebenfalls verschränkt verläuft, sich mit dem Förderband 17 kreuzt und im Bereich des Beginns der Förderbahn 2 endet. Hier werden die Paletten vom Förderband 17' mittels eines Senkrechtförderers 18' angehoben. Um wenigstens die Oberseiten der Paletten von Lack freizuhalten, ist eine Vorrichtung 21 zum Entfernen des Lacks oberhalb des Förderbandes 17' mit den Paletten 5 und vor dem Senkrechtförderer 18' angeordnet.

Die Paletten 5 besitzen einen Rahmen 22 aus Winkeleisen mit oder ohne im Eckbereich seitlich herausragenden Zapfen 27. Im Rahmen 22 ist ein Rost aus Lamellen 23 mit hohen Sägezähnen 24, niedrigen Sägezähnen 25 und Querstäben 26 angeordnet.

Die Zähne 24, 25 sind unterschiedlich hoch, um auch bei unregelmäßig geformtem Lackiergut eine sichere Auflage und ein einwandfreies Kontaktieren zu erreichen.

Zumindest im Bereich der Lackwanne 1 sind obere Führungsschienen 30 und untere Führungsschienen 31 angeordnet. Die Führungsschienen 30, 31 bestehen, wenn die Gegenstände elektrophoretisch beschichtet werden, aus Isoliermaterial. An den oberen Führungsschienen 30 sind dann Kontaktbürsten 32 mit Halterungen 33 angeordnet, die an den einen Pol einer Gleichspannungsquelle angeschlossen sind.

Die Übergabevorrichtung 6 zwischen der Bahn 2 und dem Förderband 7 besteht aus einem Schwingrahmen mit vier Parallelogrammlenkern 34, deren Koppel 35 mittels einer Welle 37 etwa mittig an den Parallelogrammlenkern 34 gelagert ist. Am Fundament der Maschine sind die Parallelogrammlenker 34 mittels Wellen 38 und Böcken 36 gelagert. Der Schwingrahmen läßt sich mittels einer Hydraulik- oder Pneumatik-Kolben-Zylinder-Einheit 39 zwischen einer Aufnahmestellung im Bereich der Förderbahn 2 in eine Abgabestellung im Bereich des Förderbandes 7 bewegen. Zum sicheren Aufnehmen einer Palette 5 sind an den freien Enden der Parallelogrammlenker 34 Hydraulik- oder Pneumatik-Kolben-Zylinder-Einheiten 40 angeordnet, die eine Zapfenhalterung 42 in Form eines Winkels tragen. Die Zapfenhalterungen 42 werden mittels der Kolben-Zylinder-Einheiten 40 gegen die Zapfen 27 einer Palette 5 bewegt, klemmen diese fest und halten sie solange, bis die Palette 5 in den Bereich des Förderbandes 7 gelangt ist und sich dort ablegen läßt.

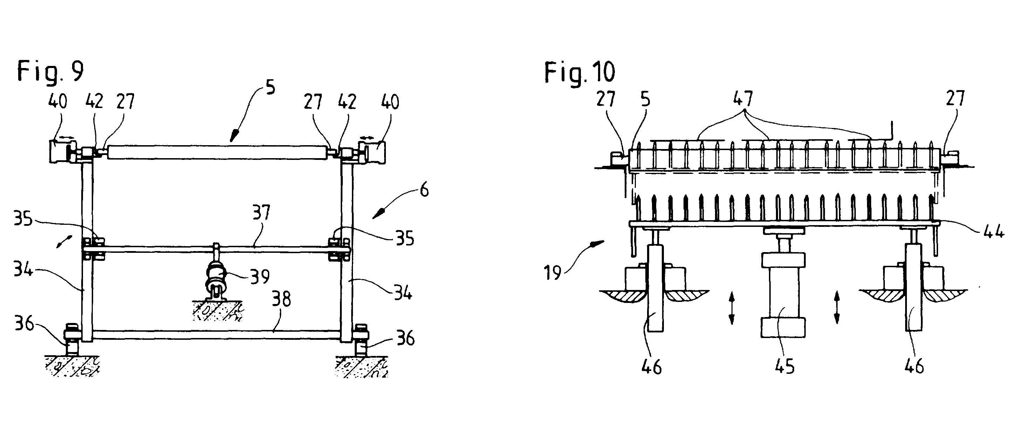

In den Fig. 1 und 2 ist eine Vorrichtung 19 zum Umlagern der vorlackierten Gegenstände schematisch, und in Fig. 10 sind Einzelheiten dieser Vorrichtung zum Umlagern dargestellt. Die Vorrichtung besteht aus einem Aushebekamm 44, der mittels Führungen 46 geführt ist und sich mittels einer Hydraulik- oder Pneumatik-Kolben-Zylinder-Einheit 45 auf- und abbewegen läßt. In der gestrichelt dargestellten Lage überragen die Zinken des Aushebekamms 44 die Oberseite der Palette 5 und heben so das vorlackierte Gut 47 kurz an. Dabei bewegt sich die Palette 5 ein kleines Stück weiter, so daß das Lackiergut 47 mit den Zähnen 24, 25 der Palette 5 an anderen Stellen in Berührung kommt und somit die ursprünglichen Berührungspunkte beim zweiten Durchgang durch die Lackwanne 1 einwandfrei überlackiert werden.

Da beim elektrophoretischen Lackieren ein einwandfreier elektrischer Kontakt zwischen dem Lackiergut 47 und der Palette 5 erforderlich ist, müssen wenigstens die mit dem Lackiergut 47 in Berührung kommenden Bereiche der Palette 5 von Lackablagerungen befreit werden. Zu diesem Zweck ist oberhalb der Förderbahn 17' im Bereich vor dem Senkrechtförderer 18' eine angetriebene, rotierende Bürste 48 angeordnet, die den anhaftenden Lack von der Oberseite der Palette 5, insbesondere von der Oberseite der Lamellen 23 mit den Sägezähnen 24, 25 entfernt und eine elektrisch leitende Oberfläche schafft.

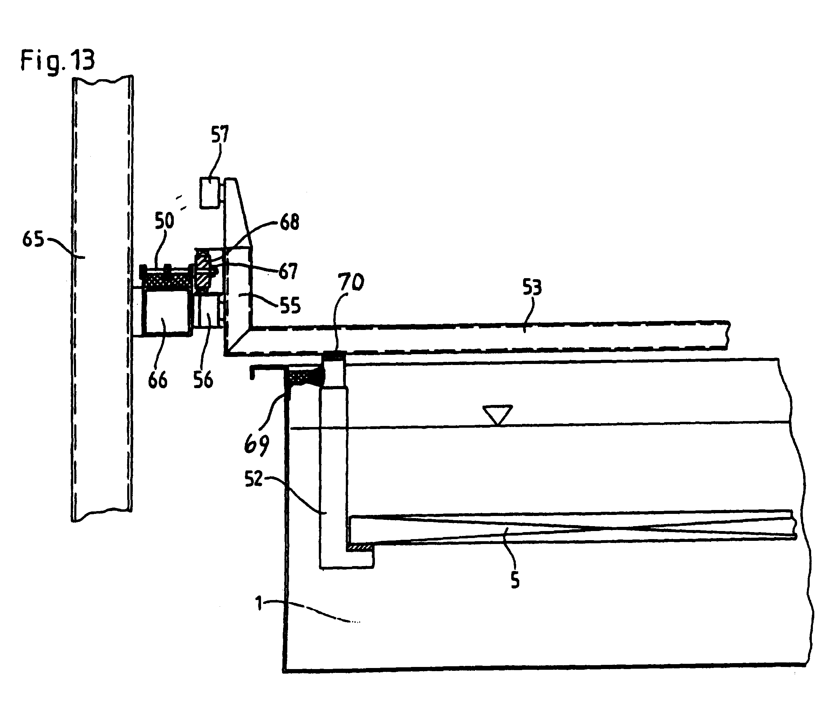

Wie sich aus den Fig. 12,13 ergibt, befindet sich oberhalb der Lackwanne 1 ein Förderer in Gestalt einer Hängebahn 49. Die Hängebahn besitzt mit Hilfe einer über Spannrollen laufenden Doppelkette 50 auf jeder Seite geführte Gondeln 51 mit nach unten weisenden Greifern in Gestalt von klauenartigen Tragarmen 52, zwischen die mit Hilfe einer Aufgabevorrichtung 43 die Paletten 5 gebracht werden. Die in Fig. 13 nur mit ihrer einen Hälfte dargestellte, jedoch symmetrisch aufgebaute Gondel besteht im wesentlichen aus einem Rahmen 53 mit rechtwinklig zueinander verlaufenden Lenkarmen 54,55, an deren freien Enden sich jeweils eine Lenkrolle 56,57 befindet, auf beiden Seiten. Die Lenkrollen greifen jeweils in U-förmige Führungsschienen 58,59,60,61 je eines trapezförmigen, an jeder Längsseite der Lackwanne angeordneten Schienenrahmens ein und dienen zum weitestgehend erschütterungsfreien Führen der Gondeln mit den Paletten.

Dies geschieht in der Weise, daß die Lenkrollen 56 an den Lenkarmen 54 in die Horizontalschienen 58,60 der trapezförmigen Rahmen und die Lenkrollen 57 an den vertikalen Lenkarmen 55 in die Schrägschienen 59,61 der beiden trapezförmigen Rahmen eingreifen. Die Schienen besitzen dazu an ihren Enden jeweils trichterartige Erweiterungen, in die an den Eckpunkten der Schienenrahmen jeweils eine der beiden Rollen 56,57 eintaucht. Auf diese Weise werden die Paletten ohne Änderung ihrer horizontalen Lage und im wesentlichen ohne Erschütterungen entsprechend der Vorschubgeschwindigkeit allmählich in das Bad eingetaucht und horizontal durch das Bad bewegt, bis sie im Bereich des Endes der Horizontalschiene 60 das Bad wieder verlassen.

Die Förderketten werden von einem Motor 62 über Ketten 63 und Kettenräder 64 taktweise angetrieben und über an einem Tragrahmen 65 angeordnete Schienen 66 geführt. Verlängerte Kettenbolzen 67 sind in den Lenkarmen 55 gelagert und tragen jeweils eine Gleitrolle 68, mit der sich die Gondel in einer der im Querschnitt etwa 5-förmigen bzw. doppel-U-förmigen Führungsschienen 58,59,60,61 abstützt. Demgemäß sind die Gondeln auf beiden Seiten über Pendellager 55,56 in den Trapezrahmen geführt.

Im Bereich des nicht in das Lackbad eintauchende Teils der Tragarme 52 sind an der Lackwanne Kontaktelemente 69 in Gestalt von die Tragarme 52 berührenden leistenförmigen Bürsten angeordnet, über die und die Tragarme 52 die Paletten 5 mit dem darauf befindlichen Lackiergut unter Strom gesetzt werden. Da sich zwischen den Tragarmen und dem Gondelrahmen 53 eine elektrische Isolierung 70 befindet, stehen von dem ganzen Förderer 49 nur dessen Tragarme 52 mit den Paletten unter Strom. Die Paletten tauchen stromlos in das Lackbad ein, was bei ungleichmäßiger Berührung zwischen den Paletten und dem Lackiergut von besonderer Bedeutung ist, um Stromspitzen zu vermeiden. Die Bürstenleisten sind so angeordnet, daß es erst dann zu einem Stromfluß kommt, wenn die Paletten nur noch horizontal bewegt werden. Beim Verlassen des Lackbades wird umgekehrt der Stromfluß unterbrochen, sobald die Horizontalbewegung der Paletten beendet ist.

Somit besitzt die Vorrichtung nach den Fig. 12,13 zwei besondere Vorteile: Zum einen kommen von dem Förderer nur die Tragarme mit den Paletten in Berührung mit dem Lack. Zum anderen ist der Förderer mit Ausnahme seiner Tragarme und der Paletten völlig stromlos.

Der Förderer nach den Fig. 12,13 läßt sich auch zum Nachlackieren benutzen, ihm schließen sich Permeatbäder und ein Trockner an, beispielsweise ein Trockner der oben beschriebenen Art. Eine erfindungsgemäße Hängebahn kann auch dazu dienen, die Paletten durch sich der Lackierwanne anschließende Wasch- bzw. Permeatbäder und/oder einen Trockner zu bewegen.

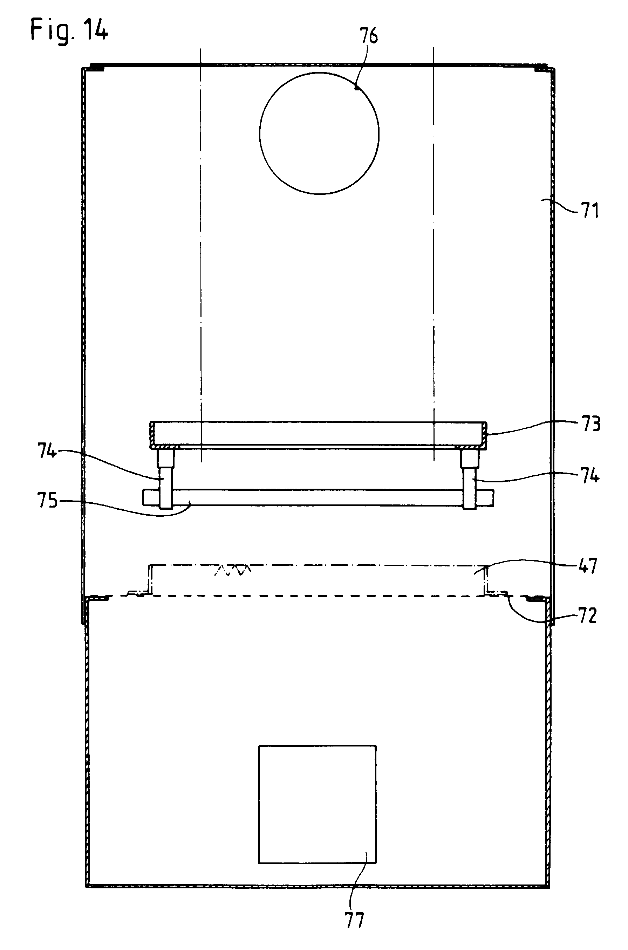

Der Trockner kann aus einer Kammer 71 mit einem Förderer 72, beispielsweise einem Palettenförderer bestehen, der das Lackiergut 47 kontinuierlich oder schrittweise durch den Trockner bewegt (Fig. 14). Oberhalb des Lackierguts 47 befindet sich ein Gitterrahmen 73 mit nach unten weisenden Halterungen 74 für stabförmige, in einer Ebene mit Abstand hintereinanderliegenden Infrarot-Strahlern 75. Die Kammer 71 ist oberhalb der Stahler 75 mit einem Lufteinlaß 76 und unterhalb des Förderers 72 mit einem Luftauslaß 77 versehen, in dem ein nicht dargestelltes Sauggebläse angeordnet ist. Das Gebläse saugt Frischluft über den Einlaß 76 durch den Gitterrahmen 73 und den Förderer 72 zum Auslaß 77. Auf diese Weise ergibt sich eine erhebliche Beschleunigung der Lackierguttrocknung mit extrem kurzen Trocknungszeiten von beispielsweise drei bis fünf Stunden bei der Verwendung von Wasserlacken.

Die erfindungsgemäße Infrarottrocknung läßt sich neben anderen Trocknungsverfahren anwenden und eignet sich besonders für plattenförmiges Lackiergut, beispielsweise Möbelteilen.

## Patentansprüche

1. Vorrichtung zum Tauchlackieren, insbesondere zum elektrophoretischen Tauchlackieren von Gegenständen mit
- einer Lackwanne (1),
- einer oberhalb der Lackwanne angeordneten Hängebahn (49),
- Gondeln (51) mit mindestens einer in eine Führungsschiene (58 bis 61) eingreifenden Lenkrolle (56,57) und
- durch die Lackwanne (1) geführten Paletten (5).

2. Vorrichtung nach Anspruch 1, dadurch gekennzeichnet, daß die Hängebahn (49) aus ketten- oder seilgeführten Gondeln (51) mit klauenartigen Tragarmen (52) besteht.

3. Vorrichtung nach Anspruch 1 oder 2, dadurch gekennzeichnet, daß mindestens eine Lenkrolle (56, 57) der Gondel (51) in Schienen (58,59,60,61) der Hängebahn (49) eingreift.

4. Vorrichtung nach einem der Ansprüche 1 bis 3, gekennzeichnet durch je eine Lenkrolle (56,57) an winklig zueinander verlaufenden Lenkarmen (54,55).

5. Vorrichtung nach einem der Ansprüche 1 bis 4, gekennzeichnet durch mindestens einen trapezförmigen Schienenrahmen (58,59,60,61) mit einer unteren, außerhalb des Lackbades verlaufenden Horizontalschiene (60).

6. Vorrichtung nach einem der Ansprüche 1 bis 5, dadurch gekennzeichnet, daß sich zwischen einer angetriebenen Kette (50) und jeder Gondel (51) eine schienengeführte Gleitrolle (68) befindet.

7. Vorrichtung nach einem der Ansprüche 1 bis 6, dadurch gekennzeichnet, daß die Gondel (51) aus einem Rahmen (53) mit den Trag- und den Lenkarmen (52;54,55) besteht.

8. Vorrichtung nach einem der Ansprüche 1 bis 7, dadurch gekennzeichnet, daß die Tragarme (52) gegenüber den anderen Fördererbestandteilen elektrisch isoliert sind.

9. Vorrichtung nach einem der Ansprüche 1 bis 8, gekennzeichnet durch im Bereich der Lackwanne (1) in die Bewegungsbahn der Tragarme (52) ragende elektrische Kontaktelemente (69).

10. Vorrichtung nach einem der Ansprüche 1 bis 9, gekennzeichnet durch eine Vorrichtung (21), die zum wenigstens bereichsweisen Entfernen von Lack an den Paletten (5) angeordnet ist.

11. Vorrichtung nach Anspruch 10, dadurch gekennzeichnet, daß die Vorrichtung (21) zum Entfernen des Lacks aus einer quer zur Bewegungsrichtung der Paletten angeordneten Bürste (48) besteht.

12. Vorrichtung nach einem der Ansprüche 1 bis 11, dadurch gekennzeichnet, daß im Anschluß an die Lackwanne (1) ein Lacktrockner (8) angeordnet ist.

13. Vorrichtung nach Anspruch 12, dadurch gekennzeichnet, daß der Palettenförderer aus einem fortlaufend durch die Lackwanne (1) geführten Teil (2,5) und einen taktweise durch den Lacktrockner (8) geführten Teil (5,7) besteht und zwischen beiden Teilen (2,5;5,7) eine Übergabevorrichtung (6) angeordnet ist.

14. Vorrichtung nach Anspruch 13, dadurch gekennzeichnet, daß die Übergabevorrichtung (6) aus einem parallelogrammgeführten Schwingrahmen (34,35,37,38) mit während der Übergabe die Zapfen (27) einer Palette (5) ergreifenden Haltevorrichtungen (40,42) besteht.

15. Vorrichtung nach einem der Ansprüche 12 bis 14, dadurch gekennzeichnet, daß im Lacktrockner (8) mindestens ein Senkrechtförderer (9) für mindestens eine Palette (5) und im oberen Bereich ein Waagerechtförderer (10) zum Ausschleusen der Paletten (5) aus dem Lacktrockner (8) angeordnet sind.

16. Vorrichtung nach Anspruch 15, dadurch gekennzeichnet, daß sich dem Lacktrockner (8) eine Kühlzone (11) mit einem Senkrechtförderer (12) anschließt.

17. Vorrichtung nach einem der Ansprüche 1 bis 16, dadurch gekennzeichnet, daß die Paletten (5) aus einem Rahmen (22) mit Sägezahnlamellen (23) bestehen.

18. Vorrichtung nach Anspruch 17, dadurch gekennzeichnet, daß die Zähne (24,25) unterschiedliche Höhen besitzen.

19. Vorrichtung nach einem der Ansprüche 1 bis 18, gekennzeichnet durch eine Vorrichtung (19) zum Umlagern des Lackiergutes (47) auf den Paletten (5).

20. Vorrichtung nach Anspruch 19, dadurch gekennzeichnet, daß die Vorrichtung (19) zum Umlagern des Lackiergutes (47) am Anfang des Palettenförderers (2') für das Nachlackieren angeordnet ist.

21. Vorrichtung nach Anspruch 18 oder 19, dadurch gekennzeichnet, daß die Vorrichtung (19) zum Umlagern des Lackiergutes (47) aus einem heb- und senkbaren, zwischen die Lamellen (23) einer Palette (5) greifenden, die Gegenstände kurz anhebenden Aushebekamm (44) besteht.

22. Vorrichtung nach einem der Ansprüche 1 bis 21, gekennzeichnet durch eine Vorrichtung zum Trocknen der Lackschicht, welche eine Kammer (8,71) mit Infrarot-Stahlern (75) aufweist.

23. Vorrichtung nach Anspruch 22, dadurch gekennzeichnet, daß die Infrarot-Strahler oberhalb des Lackierguts (47) an einem luftdurchlässigen Rahmen (73) angeordnet sind.

24. Vorrichtung nach Anspruch 22 oder 23, dadurch gekennzeichnet, daß die Kammer (8,71) mit einem Lufteinlaß (76) und einem Luftauslaß (77) sowie einem Gebläse versehen ist.

25. Verfahren zum Tauchlackieren, insbesondere zum elektrophoretischen Tauchlackieren unter Verwendung einer Vorrichtung nach einem der Ansprüche 1 bis 22, dadurch gekennzeichnet, daß das Lackiergut nach dem Lackieren von einer Seite her vorgetrocknet, gekühlt, sodann gewendet und anschließend fertiggetrocknet wird.

26. Verfahren nach Anspruch 25, dadurch gekennzeichnet, daß das Lackiergut während des Vortrocknens von der anderen Seite her gekühlt wird.

27. Verfahren zum Tauchlackieren, insbesondere zum elektrophoretischen Tauchlackieren unter Verwendung einer Vorrichtung nach einem der Ansprüche 1 bis 22, dadurch gekennzeichnet, daß das Lackiergut vorlackiert, zwischengetrocknet, sodann umgelagert, nachlackiert und schlußgetrocknet wird.

28. Verfahren nach Anspruch 27, dadurch gekennzeichnet, daß das Lackiergut nach dem Vorlackieren und Trocknen zum Nachlackieren durch dasselbe Lackbad geführt wird.

29. Verfahren nach Anspruch 27 oder 28, dadurch gekennzeichnet, daß das vorlackierte Lackiergut vor dem Nachlackieren ionisiert wird.

30. Verfahren nach einem der Ansprüche 27 bis 29, dadurch gekennzeichnet, daß das Lackiergut außerhalb des Lackbades umgelagert wird.

31. Verfahren nach einem der Anprüche 27 bis 30, dadurch gekennzeichnet, daß das Lackiergut nach dem Lackieren von einer Seite her vorgetrocknet, gekühlt, sodann gewendet und anschließend fertiggetrocknet wird.

32. Verfahren nach Anspruch 31, dadurch gekennzeichnet, daß das Lackiergut während des Vortrocknens von der anderen Seite her gekühlt wird.

33. Verfahren nach einem der Ansprüche 25 bis 32, dadurch gekennzeichnet, daß das Lackiergut mit Hilfe von Infrarot-Strahlen getrocknet wird und die beim Trocknen entstehenden Dämpfe aus dem Trocknungsraum abgeführt werden.

## Claims

1. Apparatus for immersion painting, particularly for electrophoretic immersion painting of articles, comprising
- a paint bath (1),
- a suspension conveyor (49) disposed above the paint bath,
- gondolas (51) having at least one guide roller (56, 57) engaging in a guide rail (58 to 61) and
- pallets guided through the paint bath (1).

2. Apparatus according to claim 1, characterised in that the suspension conveyor (49) comprises chain or cable-guided gondolas (51) having claw-like carrier arms.

3. Apparatus according to claim 1 or claim 2, characterised in that at least one guide roller (56, 57) of the gondola (51) engages in rails (58, 59, 60, 61) of the suspension conveyor (49).

4. Apparatus according to any one of claims 1 to 3, characterised by having steering arms (54, 55) running at an angle to one another, with a guide roller (56, 57) on each of said arms.

5. Apparatus according to any one of claims 1 to 4, characterised by having at least one trapezoidal rail frame (58, 59, 60, 61) with a lower horizontal rail (60) running outside the paint bath.

6. Apparatus according to any one of claims I to 5, characterised in that between a driven chain (50) and each gondola (51) there is a rail-guided sliding roller (68).

7. Apparatus according to any one of claims 1 to 6, characterised in that the gondola (51) comprises a frame (53) with the carrier arms and the steering arms (52; 54, 55).

8. Apparatus according to any one of claims 1 to 7, characterised in that the carrier arms (52) are electrically insulated from the other parts of the conveyor.

9. Apparatus according to any one of claims 1 to 8, characterised by having electrical contact elements (69) projecting in the path of movement of the carrier arms (52) in the region of the paint bath (1).

10. Apparatus according to any one of claims 1 to 9, characterised by having a device (21) which is arranged to effect at least local removal of paint on the pallets (5).

11. Apparatus according to claim 10, characterised in that the paint removal device (21)comprises a brush (48) disposed transverse to the direction of movement of the pallets.

12. Apparatus according to any one of claims 1 to 11, characterised in that a paint dryer (8) is located next to the paint bath (1).

13. Apparatus according to claim 12, characterised in that the pallet conveyor comprises a part (2, 5) guided continuously through the paint bath (1) and a part (5, 7) guided stepwise through the paint drier (8) and in that a transfer device is disposed between said two parts (2, 5; 5, 7).

14. Apparatus according to claim 13, characterised in that the transfer device (6) comprises a parallelogram-guided swing frame (34, 35, 37, 38) having holding devices (40, 42) which grasp the pins (27) of a pallet (5) during the transfer.

15. Apparatus according to any one of claims 12 to 14, characterised in that in the paint drier (8) there is at least one vertical conveyor (9) for at least one pallet (5) and in the upper region there is a horizontal conveyor (10) for passing the pallets (5) out of the paint dryer (8) through a lock.

16. Apparatus according to claim 15, characterised in that the paint dryer (8) is adjoined by a cooling zone (11) with a vertical conveyor.

17. Apparatus according to any one of claims 1 to 16, characterised in that the pallets (5) comprise a frame (22) with saw-tooth blades (23).

18. Apparatus according to claim 17, characterised in that the teeth (24, 25) are of different heights.

19. Apparatus according to any one of claims 1 to 18, characterised by including a device (19) for displacing the object to be painted (47) on the pallets (5).

20. Apparatus according to claim 19, characterised in that the device (19) for displacing the object to be painted (47) is located at the start of the pallet conveyor (2') for the post painting.

21. Apparatus according to claim 18 or claim 19, characterised in that the device (19) for displacing the object to be painted (47) comprises a lifting comb (44) which can be raised and lowered, engages between the blades (23) of a pallet (5) and raises the objects a short distance.

22. Apparatus according to any one of claims 1 to 21, characterised by including a device for drying the paint layer which includes a chamber (8, 71) with infrared radiators (75).

23. Apparatus according to claim 22, characterised in that the infrared radiators are located above the objects to be painted (47) on an air-permeable frame (73).

24. Apparatus according to claim 22 or claim 23, characterised in that the chamber (8, 71) is provided with an air inlet (76) and an air outlet (77).

25. Method of immersion painting, in particular of electrophoretic immersion painting using an apparatus according to any one of claims 1 to 22, characterised in that the object to be painted, after the painting, is pre-dried from one side, cooled, then turned and next finish-dried.

26. Method according to claim 25, characterised in that during the pre-drying the object to be painted is cooled from the other side.

27. Method of immersion painting, in particular of electrophoretic immersion painting using an apparatus according to any one of claims 1 to 22, characterised in that the object to be painted is pre-painted, intermediate dried, then displaced, post-painted and finish dried.

28. Method according to claim 27, characterised in that after the pre-painting and drying the object to be painted is passed through the same paint bath for post-painting.

29. Method according to any one of claims 27 to 29, characterised in that the pre-painted object to be painted is ionised before the post-painting.

30. Method according to any one of claims 27 to 29, characterised in that the object to be painted is displaced outside the paint bath.

31. Method according to any one of claims 27 to 30, characterised in that after painting from one side the object to be painted is pre-dried from one side, cooled, then turned and next finish-dried.

32. Method according to claim 31, characterised in that during the pre-drying the object to be painted is cooled from the other side.

33. Method according to any one of claims 25 to 32, characterised in that the object to be painted is dried by means of infrared radiation and that the vapours formed during the drying are led away from the drying chamber.

## Revendications

1. Dispositif de peinture par immersion, notamment de peinture électrophorétique d'objets par immersion, comprenant
- une cuve de peinture (1),
- un convoyeur suspendu (49) disposé au-dessus de la cuve de peinture,
- des nacelles (51) avec au moins un galet de guidage (56, 57) s'engageant dans un rail de guidage (58 à 61), et
- des palettes (5) dirigées à travers la cuve de peinture (1).

2. Dispositif selon la revendication 1, **caractérisé** en ce que le convoyeur suspendu (49) est constitué de nacelles (51) guidées sur chaînes ou sur câbles et pourvues de bras porteurs (52) du genre griffes.

3. Dispositif selon la revendication 1 ou 2, **caractérisé** en ce qu'au moins un galet de guidage (56, 57) de la nacelle (51) s'engage dans des rails (58, 59, 60, 61) du convoyeur suspendu (49).

4. Dispositif selon une des revendications 1 à 3, **caractérisé** par des galets de guidage respectifs (56, 57) sur des bras de guidage (54, 55) s'étendant en angle entre eux

5. Dispositif selon une des revendications 1 à 4, **caractérisé** par au moins un bâti de rails trapézoïdal (58, 59, 60, 61) avec un rail horizontal inférieur (60) s'étendant en dehors du bain de peinture.

6. Dispositif selon une des revendications 1 à 5, **caractérisé** en ce qu'une roulette (68) guidée sur rail se trouve entre une chaîne entraînée (50) et chaque nacelle (51).

7. Dispositif selon une des revendications 1 à 6, **caractérisé** en ce que la nacelle (51) est constituée d'un bâti (53) avec les bras porteurs (52) et les bras de guidage (54, 55).

8. Dispositif selon une des revendications 1 à 7, **caractérisé** en ce que les bras porteurs (52) sont isolés électriquement par rapport aux autres éléments du convoyeur.

9. Dispositif selon une des revendications 1 à 8, **caractérisé** par des éléments de contact électrique (69) faisant saillie dans la voie de déplacement des bras porteurs (52) dans la région de la cuve de peinture (1).

10. Dispositif selon une des revendications 1 à 9, **caractérisé** par un dispositif (21) qui est destiné à enlever au moins sectoriellement la peinture des palettes (5).

11. Dispositif selon la revendication 10, **caractérisé** en ce que le dispositif (21) pour enlever la peinture est constitué d'une brosse (48) disposée transversalement à la direction de déplacement des palettes.

12. Dispositif selon une des revendications 1 à 11, **caractérisé** en ce qu'un sécheur de peinture (8) fait suite à la cuve de peinture (1).

13. Dispositif selon la revendication 12, **caractérisé** en ce que le convoyeur de palettes est constitué d'une partie (2, 5) dirigée en continu à travers la cuve de peinture (1) et d'une partie (5, 7) dirigée cycliquement à travers le sécheur de peinture (8), et un dispositif de transfert (6) est disposé entre les deux parties (2, 5 ; 5, 7).

14. Dispositif selon la revendication 13, **caractérisé** en ce que le dispositif de transfert (6) est constitué d'un bâti oscillant guidé par parallélogramme (34, 35, 37, 38), avec des dispositifs de maintien (40, 42) saisissant les tenons (27) d'une palette (5) pendant le transfert.

15. Dispositif selon une des revendications 12 à 14, **caractérisé** en ce qu'au moins un convoyeur vertical (9) pour au moins une palette (5) est disposé dans le sécheur de peinture (8), ainsi que, dans la région supérieure, un convoyeur horizontal (10) pour retirer les palettes (5) du sécheur de peinture (8).

16. Dispositif selon la revendication 15, **caractérisé** en ce qu'une zone de refroidissement (11) pourvue d'un convoyeur vertical (12) fait suite au sécheur de peinture (8).

17. Dispositif selon une des revendications 1 à 16, **caractérisé** en ce que les palettes (5) sont constituées d'un bâti (22) avec des lamelles à dents de scie (23).

18. Dispositif selon la revendication 17, **caractérisé** en ce que les dents (24, 25) sont de différentes hauteurs.

19. Dispositif selon une des revendications 1 à 18, **caractérisé** par un dispositif (19) pour changer d'appui le produit à peindre (47) sur les palettes (5).

20. Dispositif selon la revendication 19, **caractérisé** en ce que le dispositif (19) pour changer d'appui le produit à peindre (47) est disposé au début du convoyeur de palettes (2') pour la peinture secondaire.

21. Dispositif selon la revendication 18 ou 19, **caractérisé** en ce que le dispositif (19) pour changer d'appui le produit à peindre (47) est constitué d'un peigne de levage (44) montant et descendant, s'engageant entre les lamelles (23) d'une palette (5) et soulevant un peu les objets.

22. Dispositif selon une des revendications 1 à 21, **caractérisé** par un dispositif de séchage de la couche de peinture qui présente une chambre (8, 71) avec des radiateurs à rayons infrarouges (75).

23. Dispositif selon la revendication 22, **caractérisé** en ce que les radiateurs à rayons infrarouges sont disposés au-dessus du produit à peindre (47), sur un bâti (73) laissant passer l'air.

24. Dispositif selon la revendication 22 ou 23, **caractérisé** en ce que la chambre (8, 71) est pourvue d'une admission d'air (76) et d'une évacuation d'air (77), ainsi que d'une soufflante.

25. Procédé de peinture par immersion, notamment de peinture électrophorétique par immersion en utilisant un dispositif selon une des revendications 1 à 22, **caractérisé** en ce que le produit à peindre est, après la peinture, préséché par un côté, refroidi, puis retourné et enfin définitivement séché.

26. Procédé selon la revendication 25, **caractérisé** en ce que le produit à peindre est refroidi par l'autre côté pendant le préséchage.

27. Procédé de peinture par immersion, notamment de peinture électrophorétique par immersion en utilisant un dispositif selon une des revendications 1 à 22, **caractérisé** en ce que le produit à peindre subit une peinture primaire, un séchage intermédiaire, puis un changement d'appui, une peinture secondaire et un séchage final.

28. Procédé selon la revendication 27, **caractérisé** en ce que le produit à peindre est, après la peinture primaire et le séchage, dirigé à travers le même bain de peinture pour la peinture secondaire.

29. Procédé selon la revendication 27 ou 28, **caractérisé** en ce que le produit à peindre ayant subi la peinture primaire est ionisé avant la peinture secondaire.

30. Procédé selon une des revendications 27 à 29, **caractérisé** en ce que le produit à peindre est changé d'appui en dehors du bain de peinture.

31. Procédé selon une des revendications 27 à 30, **caractérisé** en ce que le produit à peindre est, après la peinture, préséché par un côté, refroidi, puis retoumé et enfin définitivement séché.

32. Procédé selon la revendication 31, **caractérisé** en ce que le produit à peindre est refroidi par l'autre côté pendant le préséchage.

33. Procédé selon une des revendications 25 à 32, **caractérisé** en ce que le produit à peindre est séché à l'aide de rayons infrarouges, et les vapeurs produites lors du séchage sont évacuées hors de la chambre de séchage.
